# EUROPÄISCHE PATENTANMELDUNG

(11) **EP 4 617 709 A1**
(43) Veröffentlichungstag der Anmeldung: **17.09.2025**
(21) Anmeldenummer: 25160062.3
(22) Anmeldetag: 25.02.2025
(51) Int. Cl.: G01S 7/24, G01S 7/41, G01S 13/86, G01S 13/88, G01S 13/89

(54) **VERFAHREN ZUM BETREIBEN EINES MESSGERÄTS**

(30) Priorität: 11.03.2024 DE 102024202240
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Giliard, Anke, 70180 Stuttgart (DE); Frischen, Andreas, 71229 Leonberg (DE); Fiederer, Lukas, 72336 Balingen (DE); Moster, Benjamin, 75223 Niefern-Oeschelbronn (DE)

(57) **Zusammenfassung**

Die Erfindung betrifft ein Computerimplementiertes Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100), wobei die Radardaten (103) eine zu diagnostizierende Wand (105) abbilden;
Ausführen (203) einer Wanddiagnose durch Ausführen einer Analyse der Radardaten (103) und Bereitstellen von Diagnoseergebnissen (109) durch ein Diagnosemodul (107) des Messgeräts (100);
Bereitstellen (209) der Diagnoseergebnisse (109) und der Unsicherheitswerte (110) durch das Diagnosemodul (107) an eine Anzeigeeinheit (111) des Messgeräts (100); und
Anzeigen (211) der Diagnoseergebnisse (109) und der Unsicherheitswerte (110) in der Anzeigeeinheit (111).

## Beschreibung

Die vorliegende Erfindung betrifft ein Verfahren zum Betreiben eines Messgeräts, insbesondere eines Wanddiagnosegeräts.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Betreiben eines Messgeräts, insbesondere eines Wanddiagnosegeräts bereitzustellen. Es ist ferner eine Aufgabe, ein verbessertes Verfahren zum Trainieren einer künstlichen Intelligenz eines Messgeräts bereitzustellen.

Die Aufgabe wird durch die Verfahren der unabhängigen Ansprüche gelöst. Vorteilhafte Ausführungsformen sind Gegenstand der abhängigen Ansprüche.

Nach einem Aspekt wird ein Verfahren zum Betreiben eines Messgeräts, insbesondere eines Wanddiagnosegeräts, bereitgestellt, wobei das Verfahren umfasst:
Empfangen von Radardaten einer Radarsensoreinheit des Messgeräts, wobei die Radardaten eine zu diagnostizierende Wand abbilden;
Ausführen einer Wanddiagnose durch Ausführen einer Analyse der Radardaten und Bereitstellen von Diagnoseergebnissen durch ein Diagnosemodul des Messgeräts, wobei die Wanddiagnose umfasst:
   Ausführen einer Objekterkennung eines in der Wand angeordneten Objekts durch das Diagnosemodul, wobei die Objekterkennung eine Objektdetektion und
   eine Objektklassifikation umfasst, und wobei die Diagnoseergebnisse wenigstens eine Objektposition in der Wand und/oder einen Objekttyp des Objekts umfassen; und
   Ermitteln von Unsicherheitswerten der Diagnoseergebnisse durch das Diagnosemodul, wobei die Unsicherheitswerte der Diagnoseergebnisse Wahrscheinlichkeitswerte von Übereinstimmungen der Diagnoseergebnisse mit einem tatsächlichen Zustand der zu diagnostizierenden Wand beschreiben und wenigstens einen Wahrscheinlichkeitswert der Objektposition und/oder einen Wahrscheinlichkeitswert des Objekttyps des Objekts umfassen;
   Bereitstellen der Diagnoseergebnisse und der Unsicherheitswerte durch das Diagnosemodul an eine Anzeigeeinheit des Messgeräts; und Anzeigen der Diagnoseergebnisse und der Unsicherheitswerte in der Anzeigeeinheit.

Hierdurch kann der technische Vorteil erreicht werden, dass ein verbessertes Verfahren zum Betreiben eines Messgeräts, insbesondere eines Wanddiagnosegeräts, bereitgestellt werden kann. Hierzu werden zunächst Radardaten einer Radarsensoreinheit des Messgeräts empfangen, die die zu diagnostizierende Wand abbilden. Basierend auf den empfangenen Radardaten werden durch ein Diagnosemodul eine Wanddiagnose ausgeführt und Diagnoseergebnisse bereitgestellt.

Die Wanddiagnose umfasst hierbei das Ausführen einer Objekterkennung eines in der Wand angeordneten Objekts durch das Diagnosemodul. Die Objekterkennung umfasst eine Objektdetektion mit der Bestimmung einer Objektposition und einer Objektklassifikation mit der Bestimmung eines Objekttyps des Objekts. Die entsprechend bereitgestellten Diagnoseergebnisse umfassen hierbei wenigstens die Objektposition und den Objekttyp des in der Wand angeordneten Objekts.

Ferner werden während der Wanddiagnose Unsicherheitswerte der Diagnoseergebnisse ermittelt. Die Unsicherheitswerte beschreiben hierbei Wahrscheinlichkeitswerte der angegebenen Objektposition und Wahrscheinlichkeitswerte des angegebenen Objekttyps. Ferner werden die Diagnoseergebnisse inklusive der Unsicherheitswerte durch das Diagnosemodul an eine Anzeigeeinheit des Messgeräts bereitgestellt und in der Anzeigeeinheit einem Nutzer / einer Nutzerin angezeigt.

Das Verfahren ermöglicht somit das Ausführen einer Objekterkennung von in einer zu diagnostizierenden Wand angeordneten Objekten, ausschließlich basierend auf Radardaten einer Radarsensoreinheit des Messgeräts. Zusätzlich werden Unsicherheitswerte der Objekterkennung, sprich Unsicherheitswerte der Objektposition und des Objekttyps, generiert und in der Anzeigeeinheit angezeigt. Durch die Unsicherheitswerte kann dem Nutzer / der Nutzerin eine Qualität der ausgeführten Objekterkennung angezeigt werden. Bei hohen Wahrscheinlichkeitswerten für die Objektposition bzw. dem Objekttyp kann der Nutzer / die Nutzerin von einer hohen Qualität der Objekterkennung ausgehen, während niedrige Wahrscheinlichkeitswerte entsprechend eine niedrige Qualität der Objekterkennung anzeigen. Hierdurch kann die ausgeführte Wanddiagnose des Messgeräts zusätzlich verbessert werden.

Nach einer Ausführungsform umfasst die Wanddiagnose ferner umfasst: Ausführen einer Wandtypenklassifikation und Bestimmen eines Wandtyps der Wand durch das Diagnosemodul; und/oder
Ausführen einer Objekttiefenbestimmung und Bestimmen einer Objekttiefe des Objekts in der Wand durch das Diagnosemodul, wobei die Objekttiefe als ein Abstand des Objekts zu einer Oberfläche der Wand definiert ist; und/oder Ausführen einer Objektausdehnungsbestimmung und Bestimmen einer Objektausdehnung des Objekts entlang einer vordefinierten Richtung durch das Diagnosemodul, wobei die
Unsicherheitswerte ferner wenigstens einen Wahrscheinlichkeitswert des Wandtyps und/oder einen Wahrscheinlichkeitswert der Objekttiefe und/oder einen Wahrscheinlichkeitswert der Objektausdehnung des Objekts umfassen.

Hierdurch kann der technische Vorteil erreicht werden, dass eine weitere Verbesserung der Wanddiagnose bereitgestellt werden kann. Hierzu werden durch das Diagnosemodul im Zuge der Wanddiagnose basierend auf den Radardaten der Radarsensoreinheit eine Wandtypenklassifikation ausgeführt und ein Wandtyp der zu diagnostizierenden Wand ermittelt. Alternativ oder zusätzlich werden eine Objekttiefenbestimmung ausgeführt und eine Objekttiefe des in der Wand angeordneten Diagnosemoduls bestimmt. Die Objekttiefe beschreibt hierbei ein Abstand des Objekts zu einer Oberfläche der Wand. Alternativ oder zusätzlich werden basierend auf den Radardaten eine Objektausdehnungsbestimmung ausgeführt und eine Objektausdehnung des Objekts entlang einer vordefinierten Richtung ermittelt.

Ferner umfassen die Unsicherheitswerte Wahrscheinlichkeitswerte des Wandtyps und/oder Wahrscheinlichkeitswerte der Objekttiefe und/oder Wahrscheinlichkeitswerte der Objektausdehnung des Objekts. Durch die Ermittlung des Wandtyps und/oder der Objekttiefe und/oder des Objekttyps kann die durch die Wanddiagnose bereitgestellt Information bezüglich der zu untersuchenden Wand weiter erhöht werden. Durch die Berücksichtigung der Wahrscheinlichkeitswerte bzw. Unsicherheitswerte kann die Qualität der Wanddiagnose ermittelt und in der Anzeigeeinheit angezeigt werden.

Nach einer Ausführungsform werden in der Objekterkennung eine Mehrzahl von möglichen Objektpositionen und/oder eine Mehrzahl möglicher Objekttypen des Objekts als eigenständige Diagnoseergebnisse bestimmt, und/oder wobei in der Wandtypenklassifikation eine Mehrzahl von möglichen Wandtypen der Wand als eigenständige Diagnoseergebnisse bestimmt werden, und/oder wobei in der Objekttiefenbestimmung eine Mehrzahl von möglichen Objekttiefen als eigenständige Diagnoseergebnisse bestimmt werden und/oder wobei in der Objektausdehnungsbestimmung eine Mehrzahl von möglichen Objektausdehnungen des Objekts als eigenständige Diagnoseergebnisse bestimmt werden, wobei jedes der mehreren Diagnoseergebnisse mit einem Wahrscheinlichkeitswert versehen wird, und wobei die Mehrzahl von Diagnoseergebnisse und die Mehrzahl von Wahrscheinlichkeitswerten in der Anzeigeeinheit angezeigt werden.

Hierdurch kann der technische Vorteil erreicht werden, dass eine weitere Verbesserung der Wanddiagnose bereitgestellt werden kann. Hierzu werden in der Wanddiagnose mehrere Alternativen der ermittelten Diagnoseergebnisse inklusive entsprechender Unsicherheitswerte bereitgestellt. So können mehrere Objektposition, mehrere Objekttypen, mehrere Objekttiefen, mehrere Objektausdehnungen und/oder mehrere Wandtypen als Ergebnisse der Wanddiagnose bereitgestellt werden. Für jede der mehreren Objektpositionen, mehreren Objekttypen, mehreren Objekttiefen, mehreren Objektausdehnungen und/oder mehreren Wandtypen werden entsprechende Unsicherheitswerte in Form von Wahrscheinlichkeitswerten bereitgestellt und angezeigt.

Die verschiedenen Wahrscheinlichkeitswerte beschreiben hierbei die Sicherheit bzw. die Unsicherheit, dass die jeweilige Objektposition, der jeweilige Objekttyp, die jeweilige Objekttiefe, die jeweilige Objektausdehnung und/oder der jeweilige Wandtyp der tatsächlichen Objektposition, dem tatsächlichen Objekttyp, der tatsächlichen Objekttiefe, der tatsächlichen Objektausdehnung und/oder dem tatsächlichen Wandtyp entsprechen. Dem Nutzer / der Nutzerin können somit zusätzliche Informationen der Wanddiagnose bereitgestellt werden.

Nach einer Ausführungsform umfasst das Verfahren ferner:
Bereitstellen einer Auswahlfunktion, wobei durch Ausführen der Auswahlfunktion durch einen Nutzer / eine Nutzerin des Messgeräts wenigstens eines der angezeigten Diagnoseergebnisse auswählbar ist.

Hierdurch kann der technische Vorteil erreicht werden, dass die Wanddiagnose weiter verbessert werden kann. Hierzu wird dem Nutzer / der Nutzerin eine Auswahlfunktion bereitgestellt. Mittels der Auswahlfunktion kann der Nutzer / die Nutzerin eines oder mehrere der bereitgestellten Diagnoseergebnisse als korrektes Diagnoseergebnis auswählen. Die anderen Diagnoseergebnisse werden hingegen in der weiteren Wanddiagnose nicht weiter berücksichtigt. So kann der Nutzer / die Nutzerin beispielsweise einen der angegebenen Wandtypen auswählen. Beispielsweise kennt der Nutzer / die Nutzerin bereits den Wandtyp der zu untersuchenden Wand. Durch Auswahl des entsprechenden Wandtyps, kann dieser in der Wanddiagnose, sprich in der Objektdetektion entsprechend berücksichtigt werden. Hierdurch kann die Qualität der Wanddiagnose weiter verbessert werden.

Nach einer Ausführungsform umfasst das Verfahren ferner:
Empfangen von Auswahlbefehlen der Auswahlfunktion, wobei durch die Auswahlbefehle durch den Nutzer / die Nutzerin eines der angezeigten Diagnoseergebnisse ausgewählt wird; und
Bereitstellen von Feedbackinformationen an eine externe Servereinheit, wobei die Feedbackinformationen die Auswahlbefehle und der darin ausgewählten Diagnoseergebnisse zusammen mit den jeweiligen Radardaten umfassen.

Hierdurch kann der technische Vorteil erreicht werden, dass durch das Bereitstellen von Feedbackinformationen eine Verbesserung der Wanddiagnose erzielt werden kann. Hierzu werden bei Betätigung der Auswahlfunktion durch den Nutzer / die Nutzerin die entsprechenden Auswahlen registriert und als Feedbackinformationen an eine externe Servereinheit bereitgestellt. Basierend auf den bereitgestellten Feedbackinformationen kann eine Verbesserung des Diagnosemoduls, beispielsweise durch ein erneutes Training des Diagnosemoduls durchgeführt werden. Das entsprechend verbesserte, sprich neu trainierte Diagnosemodul kann in Form eines Updates auf dem Messgerät installiert werden, um somit eine verbesserte Wanddiagnose zu ermöglichen.

Die der externen Servereinheit bereitgestellten Feedbackinformationen umfassen hierbei die Radardaten, auf denen die Wanddiagnose ursprünglich ausgeführt wurde, die bereitgestellten Diagnoseergebnisse und die durch die Betätigung der Auswahlfunktion durch den Nutzer / die Nutzerin ausgewählten Diagnoseergebnisse. Hierauf basierend kann durch die externe Servereinheit die Qualität der ursprünglich ausgeführten Wanddiagnose ermittelt werden. Hierauf basierend kann die Wanddiagnose, sprich das Diagnosemodul durch Ausführen eines erneuten Trainings durch die externe Servereinheit verbessert werden.

Feedbackinformation umfasst im Sinne der Anmeldung jegliche Information, die durch auf einer Handlung des Nutzers / der Nutzerin basiert und als eine Rückmeldung auf die Qualität der ausgeführten Wanddiagnose gedeutet werden kann. Die Feedbackinformation kann eine direkte, gegebenenfalls textbasierte Rückmeldung des Nutzers / der Nutzerin sein. Alternativ oder zusätzlich kann

Nach einer Ausführungsform umfasst das Messgerät ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten, wobei das Diagnosemodul eingerichtet ist, die Wanddiagnose unter Berücksichtigung der zusätzlichen Sensordaten auszuführen.

Hierdurch kann der technische Vorteil erreicht werden, dass durch weitere Sensordaten zusätzlicher Sensoren, die jeweils eingerichtet sind, unterschiedliche physikalische Messgrößen zu detektieren, zusätzliche Information zuzüglich zu den Informationen der Radardaten der Radarsensoreinheit in die Wanddiagnose einfließen können. Diese zusätzlichen und zu den Informationen der Radardaten der Radarsensoreinheit vorzugsweise komplementären Information ermöglichen eine weitere Präzisierung der Wanddiagnose bzw. der Objekterkennung.

Nach einer Ausführungsform umfasst das Diagnosemodul wenigstens eine entsprechend trainierte künstliche Intelligenz, die eingerichtet ist, basierend auf den Radardaten und/oder den zusätzlichen Sensordaten eine Objekterkennung und/oder eine Wandklassifikation und/oder eine Objekttiefenbestimmung durchzuführen

Hierdurch kann der technische Vorteil erreicht werden, dass durch die Ausbildung des Diagnosemoduls als eine entsprechend trainierte künstliche Intelligenz, die darauf trainiert ist, basierend auf den Radardaten, bzw. gegebenenfalls unter Berücksichtigung der Information der zusätzlichen Sensoren, eine Objekterkennung und/oder eine Wandklassifikation und/oder eine Objekttiefenbestimmung und/oder eine Objektausdehnungsbestimmung auszuführen, ein zuverlässiges und leistungsfähiges Diagnosemodul bereitgestellt werden kann. Durch die Verwendung der Technik der künstlichen Intelligenz kann eine präzise Wanddiagnose bereitgestellt werden.

Nach einer Ausführungsform umfassen die Objektklassen des Objekttyps des Objekts: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps der Wand umfassen: Betonwand, Leichtbau-/Trockenbauwand, gemauerte Wand und/oder von vermauerten Steinen der Wand, Fußbodenheizung, Wandheizung.

Hierdurch kann der technische Vorteil erreicht werden, dass Objekte und Wände unterschiedlichster Typen erkannt und klassifiziert werden können.

Nach einem Aspekt wird ein Verfahren zum Trainieren einer künstlichen Intelligenz eines Messgeräts zur Wanddiagnostik bereitgestellt, umfassend: Bereitstellen eines Trainingsdatensatzes zum Trainieren der künstlichen Intelligenz, wobei der Trainingsdatensatz eine Wand und ein in der Wand ausgebildetes Objekt abbildende Radardaten und die nach dem Verfahren zum Betreiben eines Messgeräts bereitgestellten Feedbackinformationen umfasst; Trainieren der künstlichen Intelligenz basierend auf dem Trainingsdatensatz und unter Berücksichtigung der Feedbackinformationen zum Ausführen einer Objekterkennung eines in einer Wand ausgebildeten Objekts, wobei die Objekterkennung wenigstens eine Objektdetektion und eine Objektklassifikation umfasst.

Hierdurch kann der technische Vorteil erreicht werden, dass ein verbessertes Training der künstlichen Intelligenz des Wanddiagnosegeräts, insbesondere ein Nach-Training, ermöglicht ist, bei dem Feedback der Nutzer / die Nutzerin der Wanddiagnosegeräte mitberücksichtigt wird.

Nach einem Aspekt wird eine Recheneinheit bereitgestellt, die eingerichtet ist, das Verfahren zum Betreiben eines Messgeräts nach einer der voranstehenden Ausführungsformen und/oder das Verfahren zum Trainieren einer künstlichen Intelligenz auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Betreiben eines Messgeräts nach einer Ausführungsformen und/oder das Verfahren zum Trainieren einer künstlichen Intelligenz auszuführen.

Ausführungsformen der Erfindung sind mit Bezug auf die folgenden Fig. beschrieben. Die Fig. zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: eine schematische Darstellung eines Systems zum Betreiben eines Messgeräts gemäß einer Ausführungsform,
- Fig. 7: ein Flussdiagramm eines Verfahrens zum Betreiben eines Messgeräts gemäß einer Ausführungsform,
- Fig. 8: ein weiteres Flussdiagramm des Verfahrens zum Betreiben eines Messgeräts gemäß einer weiteren Ausführungsform,
- Fig. 9: ein Flussdiagramm eines Verfahrens zum Trainieren einer künstlichen Intelligenz eines Messgeräts gemäß einer Ausführungsform, und
- Fig. 10: eine schematische Darstellung eines Computerprogrammprodukts.

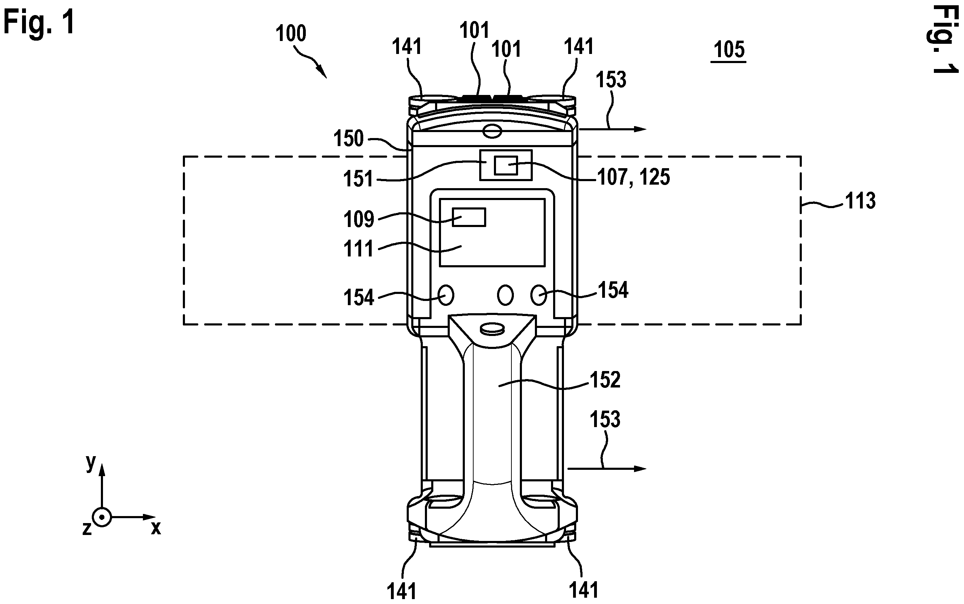

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es dem Nutzer / der Nutzerin zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch den Nutzer / die Nutzerin, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 dem Nutzer / der Nutzerin des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend dem Nutzer / der Nutzerin des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

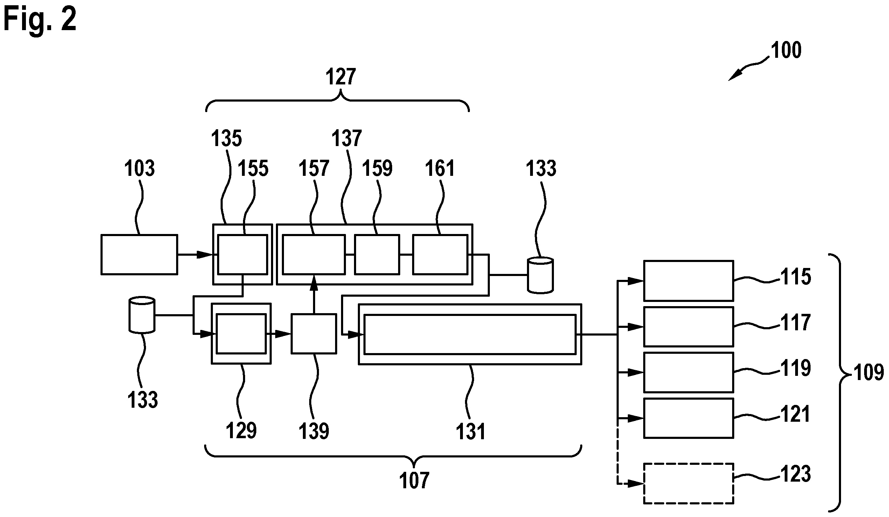

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

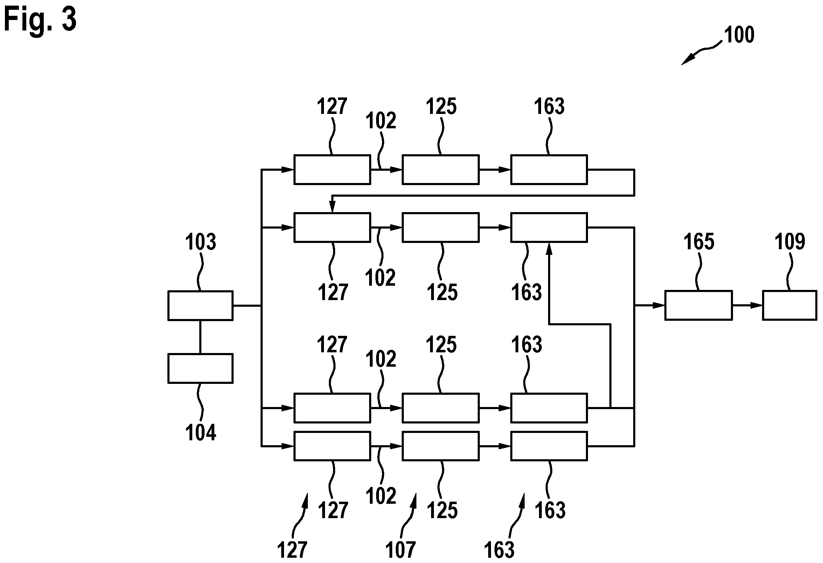

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

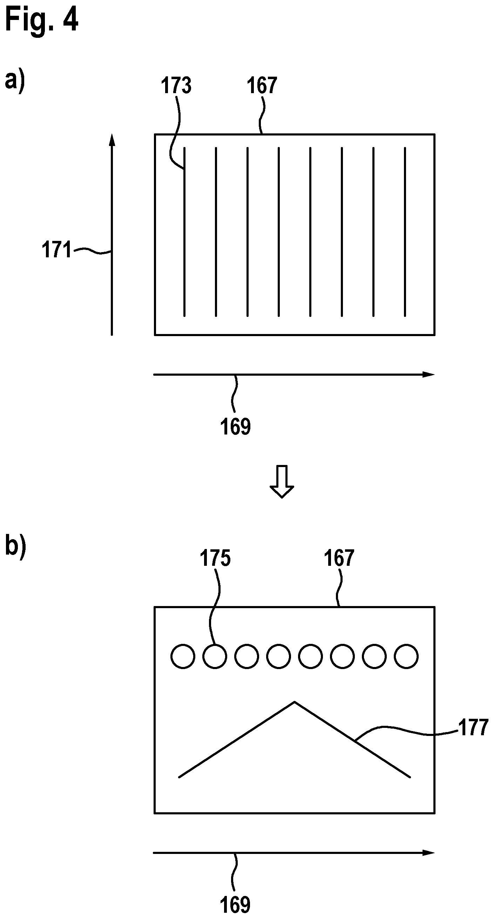

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Fig. 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Fig. 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

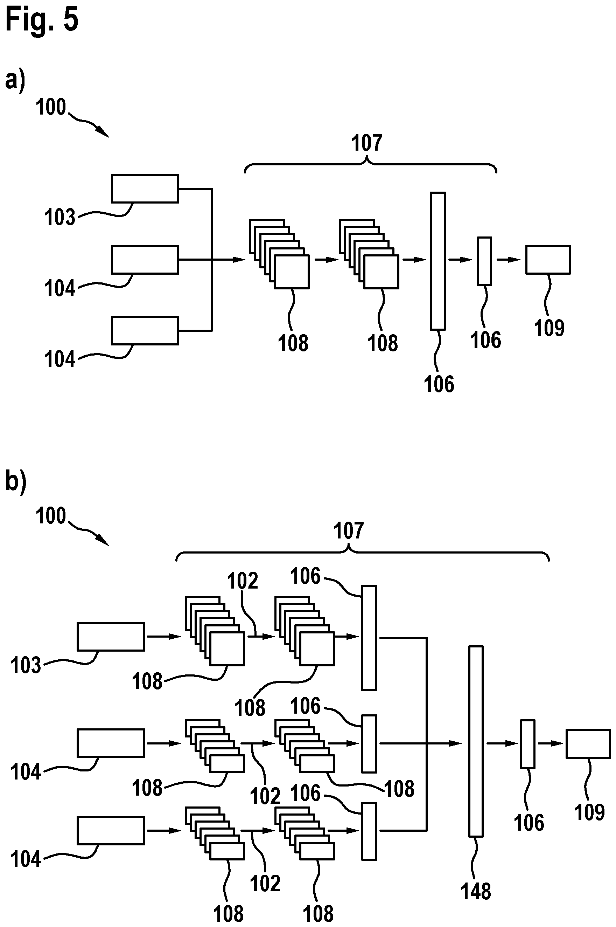

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

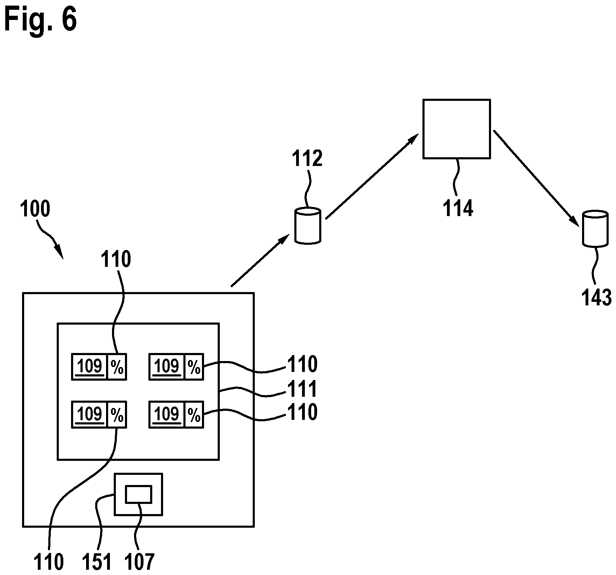

Fig. 6 zeigt eine schematische Darstellung eines Systems 600 zum Betreiben eines Messgeräts 100 gemäß einer Ausführungsform.

In der gezeigten Ausführungsform umfasst das System zum Betreiben eines Messgeräts 100 neben dem Messgerät 100 eine externe Servereinheit 114. Erfindungsgemäß empfängt das Messgerät 100 zunächst die Radardaten 103 der Radarsensoreinheit 101. Die Radardaten 103 bilden hierbei die zu untersuchende Wand 105 inklusive der darin angeordneten Objekte 113 ab.

Hierauf basierend wird durch das Diagnosemodul 107 die Wanddiagnose basierend auf den Radardaten 103 ausgeführt und es werden entsprechende Diagnoseergebnisse 109 generiert. Die Wanddiagnose umfasst wenigstens das Ausführen einer Objekterkennung inklusive einer Objektdetektion mit der Bestimmung einer Objektposition 115 und einer Objektklassifikation mit der Bestimmung des Objekttyps 117 der in der Wand 105 angeordneten Objekte 113.

Erfindungsgemäß umfasst die Wanddiagnose ferner das Ermitteln von Unsicherheitswerten 110 der Diagnoseergebnisse 109. Die Unsicherheitswerte beschreiben hierbei Wahrscheinlichkeitswerte einer Übereinstimmung der ermittelten Diagnoseergebnisse 109 und einem tatsächlichen Zustand der zu diagnostizierenden Wand 105. Die Unsicherheitswerte 110 umfassen erfindungsgemäß wenigstens Wahrscheinlichkeitswerte bezüglich der ermittelten Objektposition 115 und Wahrscheinlichkeitswerte des ermittelten Objekttyps 117.

Erfindungsgemäß werden die ermittelten Diagnoseergebnisse 109 inklusive der Unsicherheitswerte 110 durch das Diagnosemodul 107 der Anzeigeeinheit 111 bereitgestellt und in der Anzeigeeinheit 111 dargestellt.

In der gezeigten Graphik sind die Diagnoseergebnisse 109 und die entsprechenden Unsicherheitswerte 110 in der Anzeigeeinheit 111 graphisch dargestellt.

Der Nutzer / die Nutzerin kann somit unter Berücksichtigung der Unsicherheitswerte 110 die Wanddiagnose bzw. die bereitgestellten Diagnoseergebnisse 109 entsprechend interpretieren.

Gemäß einer Ausführungsform kann die Wanddiagnose neben der Objektposition 115 und dem Objekttyp 117 ferner die Objekttiefe 119 bzw. die Objektausdehnung 121 des in der Wand 105 angeordneten Objekts 113 umfassen. Zusätzlich kann die Wanddiagnose die Bestimmung des Wandtyps 123 der Wand 105 umfassen. Die Objekttiefe 119, die Objektausdehnung 121 wie auch der Wandtyp 123 können als entsprechende Diagnoseergebnisse 109 inklusive entsprechender Unsicherheitswerte 110 in der Anzeigeeinheit 111 angezeigt werden.

Gemäß einer Ausführungsform umfasst die Wanddiagnose das Bestimmen einer Mehrzahl von möglichen Objektpositionen 115, möglichen Objekttypen 117, möglichen Objekttiefen 119, möglichen Objektausdehnungen 121 und/oder mögliche Wandtypen 123. Die verschiedenen möglichen Objektpositionen 115, Objekttypen 117, Objekttiefen 119, Objektausdehnungen 121 und/oder Wandtypen 123 können mit entsprechenden Unsicherheitswerten 110 versehen und in der Anzeigeeinheit 111 angezeigt werden.

Gemäß einer Ausführungsform wird dem Nutzer / der Nutzerin ferner eine Auswahlfunktion 116 bereitgestellt. Mittels der Auswahlfunktion 116 können durch Betätigung durch den Nutzer / die Nutzerin verschiedene der angezeigten Diagnoseergebnisse 109 ausgewählt werden. Beispielsweise kann der Nutzer / die Nutzerin bei Kenntnis des tatsächlichen Wandtyp 123 den entsprechend vorgeschlagenen Wandtyp 123 durch die Auswahlfunktion 116 auswählen.

Der entsprechend ausgewählte Wandtyp 113 wird darauffolgend in der restlichen Wanddiagnose berücksichtigt, während die nicht ausgewählten vorgeschlagenen Wandtypen 123 unberücksichtigt bleiben. Gleiches gilt für die entsprechend weiteren angezeigten Diagnoseergebnisse 109.

Gemäß einer Ausführungsform werden basierend auf den empfangenen Auswahlbefehlen der Auswahlfunktion 116 Feedbackinformationen 112 an die externe Servereinheit 114 bereitgestellt, wobei mit den Auswahlbefehlen durch den Nutzer / die Nutzerin die angezeigten Diagnoseergebnisse 109 entsprechend ausgewählt werden. Die Feedbackinformationen 112 umfassen hierbei die Auswahlbefehle und die darin ausgewählten Diagnoseergebnisse 109 zusammen mit den jeweiligen Radardaten 103.

Die Feedbackinformationen 112 können hierbei beispielsweise die Information umfassen, welche Diagnoseergebnisse 109 durch die Nutzer/Nutzerinnen als den Zustand der Wand 105 zutreffend darstellend ausgewählt haben. Ferner können die Feedbackinformationen 112 die Information umfassen, welche Diagnoseergebnisse 109 die Nutzer/Nutzerinnen nicht als zutreffend darstellend ausgewählt haben.

Basierend auf den Feedbackinformationen 112 kann die externe Servereinheit 114 durch Training des Algorithmus des Diagnosemoduls 107 das Diagnosemodul in Hinsicht auf die Qualität der Wanddiagnose verbessern.

Gemäß einer Ausführungsform werden die Feedbackinformationen 112 durch eine Mehrzahl von verschiedenen Messgeräten 100 bereitgestellt. Die Messgeräte 100 können hierbei beispielsweise durch eine Mehrzahl von Nutzern/Nutzerinnen im normalen Betrieb verwendet werden. Während des Betriebs der Messgeräte werden die entsprechenden Feedbackinformationen 109 beispielsweise zunächst auf einer entsprechenden Speichereinheit des Messgeräts 100 gespeichert und der externen Servereinheit 114 bereitgestellt.

Gemäß einer Ausführungsform ist die externe Servereinheit 114 ferner eingerichtet, unter Berücksichtigung der Feedbackinformationen einen Trainingsdatensatz 143 zu generieren. Basierend auf dem Trainingsdatensatz 143 ist ein erneutes Training des Diagnosemoduls 107 ermöglicht, wobei beim erneuten Training die Feedbackinformationen 112 berücksichtigt werden. Das entsprechend neu trainierte Diagnosemodul 107 kann darauffolgend in neue Messgeräte 100 installiert und/oder in bereits bestehende Messgeräte 100 als ein Update des bestehenden Diagnosemoduls 107 installiert werden. Durch die Berücksichtigung der Feedbackinformationen im Training des Diagnosemoduls 107 kann die Performance des Diagnosemoduls 107 verbessert werden.

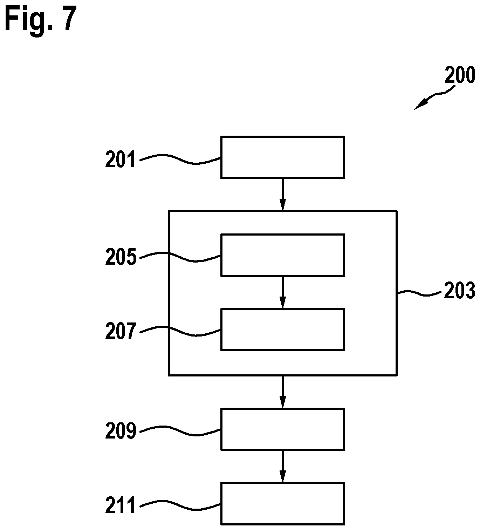

Fig. 7 zeigt ein Flussdiagramm eines Verfahrens 200 zum Betreiben eines Messgeräts 100 gemäß einer Ausführungsform.

Zum Betreiben des Messgeräts 100 werden in einem ersten Verfahrensschritt 201 zunächst Radardaten 103 der Radarsensoreinheit 101 des Messgeräts 100 empfangen.

In einem weiteren Verfahrensschritt 203 wird durch das Diagnosemodul 107 des Messgeräts 100 die Wanddiagnose basierend auf den Radardaten 103 ausgeführt.

Hierzu wird in einem Verfahrensschritt 205 eine Wanderkennung des in der Wand 105 angeordneten Objekts 113 durch das Diagnosemodul 107 ausgeführt. Die Objekterkennung umfasst hierbei wenigstens eine Objektdetektion mit Bestimmung der Objektposition 115 und einer Objektklassifikation mit Bestimmung des Objekttyps 117 des Objekts 113.

In einem weiteren Verfahrensschritt 207 werden zu den generierten Diagnoseergebnissen 109 entsprechende Unsicherheitswerte 110 ermittelt. Die Unsicherheitswerte beschreiben Wahrscheinlichkeiten der Übereinstimmung der Diagnoseergebnisse 109 mit dem tatsächlichen Zustand der zu diagnostizierenden Wand 105.

In einem weiteren Verfahrensschritt 209 werden die Diagnoseergebnisse 109 und die Unsicherheitswerte 110 der Anzeigeeinheit 111 des Messgeräts 100 bereitgestellt. In einem weiteren Verfahrensschritt 211 werden die Diagnoseergebnisse 109 und die Unsicherheitswerte 110 in der Anzeigeeinheit 111 angezeigt.

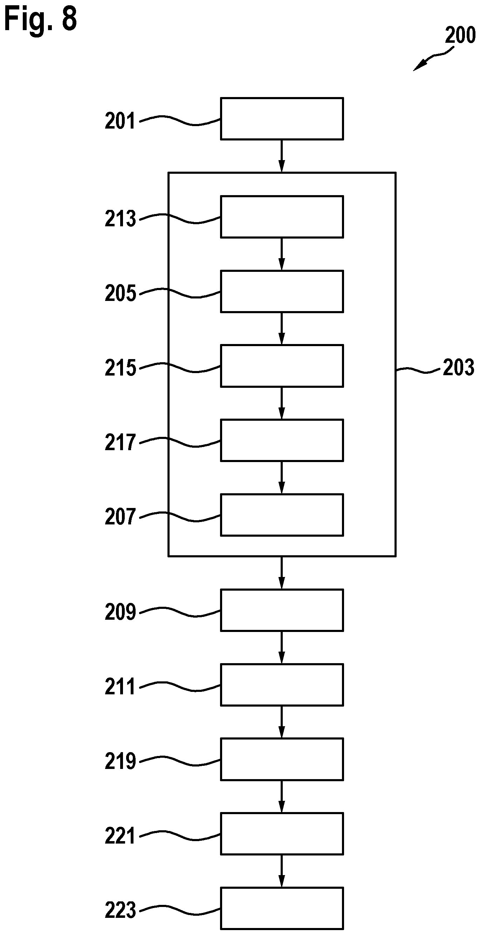

Fig. 8 zeigt ein weiteres Flussdiagramm des Verfahrens 200 zum Betreiben eines Messgeräts 100 gemäß einer weiteren Ausführungsform.

Die Ausführungsform in Fig. 8 basiert auf der Ausführungsform in Fig. 7 und umfasst alle dort beschriebenen Verfahrensschritte.

In der gezeigten Ausführungsform umfasst die Wanddiagnose ferner das Ausführen einer Wandtypenklassifikation und der Bestimmung eines Wandtyps 123 in einem Verfahrensschritt 213. Ferner wird in einem Verfahrensschritt 215 eine Objekttiefenbestimmung ausgeführt und eine Objekttiefe 119 des Objekts 113 bestimmt.

Ferner wird in einem Verfahrensschritt 217 eine Objektausdehnungsbestimmung ausgeführt und die Objektausdehnung 121 des Objekts 113 bestimmt.

Darüber hinaus wird in einem Verfahrensschritt 219 die Auswahlfunktion 116 bereitgestellt.

In einem Verfahrensschritt 221 werden die Auswahlbefehle der Auswahlfunktion 216 empfangen, wobei durch die Auswahlbefehle eines der angezeigten Diagnoseergebnisse ausgewählt wird.

In einem weiteren Verfahrensschritt 223 werden Feedbackinformationen 112 an einer externen Servereinheit 114 bereitgestellt. Die Feedbackinformationen 112 umfassen die Auswahlbefehle und die darin ausgewählten Diagnoseergebnisse 109 inklusive der jeweiligen Radardaten 103.

Gemäß einer Ausführungsform kann die Wanddiagnose auch unter Berücksichtigung von zusätzlichen Sensorinformationen 104 ausgeführt werden.

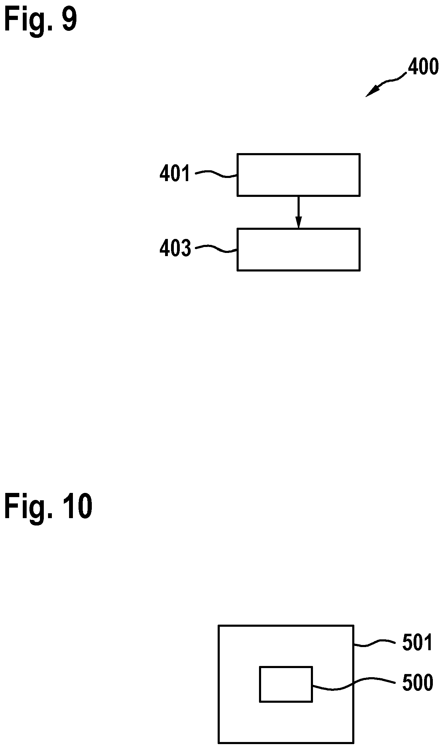

Fig. 9 zeigt ein Flussdiagramm eines Verfahrens 400 zum Trainieren einer künstlichen Intelligenz 125 eines Messgeräts 100 gemäß einer Ausführungsform.

Zum Trainieren der künstlichen Intelligenz 125 des Messgeräts 100 zur Wanddiagnose wird in einem Verfahrensschritt 401 zunächst ein Trainingsdatensatz 143 zum Trainieren der künstlichen Intelligenz 125 bereitgestellt. Der Trainingsdatensatz 143 umfasst hierbei Radardaten 103, die zu diagnostizierende Wände 105 inklusive der in den Wänden 105 ausgebildete Objekte 113 ab. Ferner umfasst der Trainingsdatensatz 123 die gemäß dem oben beschriebenen Verfahren 200 zum Betreiben des Messgeräts 100 bereitgestellten Feedbackinformationen 112. Die Feedbackinformationen 112 werden im Trainingsdatensatz 143 als Zusatzinformationen zu den bereitgestellten Radardaten 103 berücksichtigt.

Die Radardaten 103 können auf Messungen basieren, die ausschließlich zum Erstellen eines Trainingsdatensatzes ausgeführt wurden. Alternativ oder zusätzlich können die Radardaten 103 während des Betriebs einer Mehrzahl von Messgeräten 100 durch eine Mehrzahl von Nutzern/Nutzerinnen aufgenommen und zum Erstellen des Trainingsdatensatzes 143 der externen Servereinheit 116 bereitgestellt worden sein.

In einem weiteren Verfahrensschritt 403 wird das Training der künstlichen Intelligenz basierend auf dem zuvor generierten bereitgestellten Trainingsdatensatzes 143 unter Berücksichtigung der Feedbackinformationen ausgeführt. Die künstliche Intelligenz 125 wird hierbei zum Ausführen einer Objekterkennung von in Wänden 105 ausgebildeten Objekten 113 trainiert.

Fig. 10 zeigt eine schematische Darstellung eines Computerprogrammprodukts 500, umfassend Befehle, die bei der Ausführung des Programms durch eine Datenverarbeitungseinheit diese veranlassen, das Verfahren 200 zum Betreiben eines Messgeräts 100 und/oder das Verfahren 400 zum Trainieren einer künstlichen Intelligenz 125 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100), wobei die Radardaten (103) eine zu diagnostizierende Wand (105) abbilden;
Ausführen (203) einer Wanddiagnose durch Ausführen einer Analyse der Radardaten (103) und Bereitstellen von Diagnoseergebnissen (109) durch ein Diagnosemodul (107) des Messgeräts (100), wobei die Wanddiagnose umfasst:
Ausführen (205) einer Objekterkennung eines in der Wand (105) angeordneten Objekts (113) durch das Diagnosemodul (107), wobei die Objekterkennung eine Objektdetektion und eine Objektklassifikation umfasst, und wobei die Diagnoseergebnisse (109) wenigstens eine Objektposition (115) in der Wand (105) und/oder einen Objekttyp (117) des Objekts (113) umfassen; und
Ermitteln (207) von Unsicherheitswerten (110) der Diagnoseergebnisse (109) durch das Diagnosemodul (107), wobei die Unsicherheitswerte (110) der Diagnoseergebnisse (109) Wahrscheinlichkeitswerte (110) von Übereinstimmungen der Diagnoseergebnisse (109) mit einem tatsächlichen Zustand der zu diagnostizierenden Wand (105) beschreiben und wenigstens einen Wahrscheinlichkeitswert der Objektposition (115) und/oder einen Wahrscheinlichkeitswert des Objekttyps (117) des Objekts (113) umfassen;
Bereitstellen (209) der Diagnoseergebnisse (109) und der Unsicherheitswerte (110) durch das Diagnosemodul (107) an eine Anzeigeeinheit (111) des Messgeräts (100); und
Anzeigen (211) der Diagnoseergebnisse (109) und der Unsicherheitswerte (110) in der Anzeigeeinheit (111).

2. Verfahren (200) nach Anspruch 1, wobei die Wanddiagnose ferner umfasst:
Ausführen (213) einer Wandtypenklassifikation und Bestimmen eines Wandtyps (123) der Wand (105) durch das Diagnosemodul (107); und/oder Ausführen (215) einer Objekttiefenbestimmung und Bestimmen einer Objekttiefe (119) des Objekts (113) in der Wand (105) durch das Diagnosemodul (107), wobei die Objekttiefe (119) als ein Abstand des Objekts (113) zu einer Oberfläche der Wand (105) definiert ist; und/oder Ausführen (217) einer Objektausdehnungsbestimmung und Bestimmen einer Objektausdehnung (121) des Objekts (113) entlang einer vordefinierten Richtung durch das Diagnosemodul (107), wobei die Unsicherheitswerte (110) ferner wenigstens einen Wahrscheinlichkeitswert des Wandtyps (123) und/oder einen Wahrscheinlichkeitswert der Objekttiefe (119) und/oder einen Wahrscheinlichkeitswert der Objektausdehnung (121) des Objekts (113) umfassen.

3. Verfahren (200) nach Anspruch 1 oder 2, wobei in der Objekterkennung eine Mehrzahl von möglichen Objektpositionen (115) und/oder eine Mehrzahl möglicher Objekttypen (117) des Objekts (113) als eigenständige Diagnoseergebnisse (109) bestimmt werden, und/oder wobei in der Wandtypenklassifikation eine Mehrzahl von möglichen Wandtypen (123) der Wand (105) als eigenständige Diagnoseergebnisse (109) bestimmt werden, und/oder wobei in der Objekttiefenbestimmung eine Mehrzahl von möglichen Objekttiefen (119) als eigenständige Diagnoseergebnisse (109) bestimmt werden und/oder wobei in der Objektausdehnungsbestimmung eine Mehrzahl von möglichen Objektausdehnungen (121) des Objekts (113) als eigenständige Diagnoseergebnisse (109) bestimmt werden, wobei jedes der mehreren Diagnoseergebnisse (109) mit einem Wahrscheinlichkeitswert versehen wird, und wobei die Mehrzahl von Diagnoseergebnisse (109) und die Mehrzahl von Wahrscheinlichkeitswerten in der Anzeigeeinheit (111) angezeigt werden.

4. Verfahren (200) nach Anspruch 3, ferner umfassend:
Bereitstellen (219) einer Auswahlfunktion (116), wobei durch Ausführen der Auswahlfunktion (116) durch einen Nutzer /eine Nutzerin des Messgeräts (100) wenigstens eines der angezeigten Diagnoseergebnisse (109) auswählbar ist.

5. Verfahren (200) nach Anspruch 4, ferner umfassend:
Empfangen (221) von Auswahlbefehlen der Auswahlfunktion (116), wobei durch die Auswahlbefehle durch den Nutzer / die Nutzerin eines der angezeigten Diagnoseergebnisse (109) ausgewählt wird; und
Bereitstellen (223) von Feedbackinformationen (112) an eine externe Servereinheit (114), wobei die Feedbackinformationen (112) die Auswahlbefehle und der darin ausgewählten Diagnoseergebnisse (109) zusammen mit den jeweiligen Radardaten (103) umfassen.

6. Verfahren (200) nach einem der voranstehenden Ansprüche, wobei das Messgerät (100) ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten umfasst, und wobei das Diagnosemodul (107) eingerichtet ist, die Wanddiagnose unter Berücksichtigung der zusätzlichen Sensordaten auszuführen.

7. Verfahren (200) nach einem der voranstehenden Ansprüche, wobei das Diagnosemodul (107) wenigstens eine entsprechend trainierte künstliche Intelligenz (125) umfasst, die eingerichtet ist, basierend auf den Radardaten (103) und/oder den zusätzlichen Sensordaten eine Objekterkennung und/oder eine Wandklassifikation und/oder eine Objekttiefenbestimmung durchzuführen.

8. Verfahren (200) nach einem der voranstehenden Ansprüche, wobei Objektklassen des Objekttyps (117) des Objekts (113) umfassen: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps (123) der Wand (105) umfassen: Betonwand, Leichtbau-/Trockenbauwand, gemauerte Wand und/oder von vermauerten Steinen der Wand, Fußbodenheizung, Wandheizung.

9. Verfahren (400) zum Trainieren einer künstlichen Intelligenz (125) eines Messgeräts (100) zur Wanddiagnostik, umfassend:
Bereitstellen (401) eines Trainingsdatensatzes (143) zum Trainieren der künstlichen Intelligenz (125), wobei der Trainingsdatensatz (143) eine Wand (105) und ein in der Wand (105) ausgebildetes Objekt (113) abbildende Radardaten (103) und die nach dem Verfahren (200) zum Betreiben eines Messgeräts (100) nach Anspruch 5 bereitgestellten Feedbackinformationen (112) umfasst;
Trainieren (403) der künstlichen Intelligenz (125) basierend auf dem Trainingsdatensatz (143) und unter Berücksichtigung der Feedbackinformationen zum Ausführen einer Objekterkennung eines in einer Wand (105) ausgebildeten Objekts (113), wobei die Objekterkennung wenigstens eine Objektdetektion und eine Objektklassifikation umfasst.

10. Recheneinheit (151), die eingerichtet ist, das Verfahren (200) zum Betreiben eines Messgeräts (100) nach einem der voranstehenden Ansprüche 1 bis 8 und/oder das Verfahren (400) zum Trainieren einer künstlichen Intelligenz (125) eines Messgeräts (100) zur Wanddiagnostik nach Anspruch 9 auszuführen.

11. Computerprogrammprodukt (500) umfassend Befehle, die bei der Ausführung des Programms durch eine Datenverarbeitungseinheit diese veranlassen, das Verfahren (200) zum Betreiben eines Messgeräts (100) nach einem der voranstehenden Ansprüche 1 bis 8 und/oder das Verfahren (400) zum Trainieren einer künstlichen Intelligenz (125) eines Messgeräts (100) zur Wanddiagnostik nach Anspruch 9 auszuführen.
